Europäisches Patentamt

**European Patent Office**

Office européen des brevets

(11) Veröffentlichungsnummer: **0 013 882**
**B1**

(12) # EUROPÄISCHE PATENTSCHRIFT

(45) Veröffentlichungstag der Patentschrift:
26.08.81

(51) Int. Cl.³: **B 29 D 27/04,** B 29 D 27/02

(21) Anmeldenummer: **80100029.0**

(22) Anmeldetag: **04.01.80**

(54) **Einrichtung zum diskontinuierlichen Herstellen von Blockschaumstoff.**

(30) Priorität: **13.01.79 DE 2901176**

(43) Veröffentlichungstag der Anmeldung:
**06.08.80 Patentblatt 80/16**

(45) Bekanntmachung des Hinweises auf die Patenterteilung:
**26.08.81 Patentblatt 81/34**

(84) Benannte Vertragsstaaten:
**CH DE FR GB IT**

(56) Entgegenhaltungen:
**DE-A-1 704 452**
**DE-A-2 053 435**
**US-A-2 649 620**

(73) Patentinhaber: **MASCHINENFABRIK HENNECKE GMBH,**
**Postfach 1180, D-5205 St. Augustin 1 (DE)**

(72) Erfinder: **Röhrig, Lothar, Frankfurter Strasse 142,**
**D-5202 Hennef 1 (DE)**
Erfinder: **Bücher, Gottfried, Lülsdorfer Strasse 5,**
**D-5210 Troisdorf-Spich (DE)**
Erfinder: **Klahre, Horst, Thüringer Allee 124, D-5205 St.**
**Augustin 2 (DE)**

(74) Vertreter: **Müller, Heinz-Gerd, Dipl.-Ing. et al, c/o Bayer**
**AG Zentralbereich Patente Marken und Lizenzen,**
**D-5090 Leverkusen 1, Bayerwerk (DE)**

## Einrichtung zum diskontinuierlichen Herstellen von Blockschaumstoff

Die Erfindung richtet sich auf eine Einrichtung zum diskontinuierlichen Herstellen von Blockschaumstoff, wobei eine in einem brückenartigen Rahmengestell senkrecht verschiebbare, mit Komponentenzuleitungen versehene, einen Rührer aufweisende Mischvorrichtung vorgesehen ist, deren bodenloser Mischbehälter an einer Kopfplatte befestigt ist, die Einlassöffnungen für die Komponenten aufweist, und wobei unterhalb des Mischbehälters ein Formkasten plazierbar ist.

Einrichtungen dieser Art werden eingesetzt, wenn sich die kontinuierliche Fertigung von Blockschaumstoff wegen zu geringen Bedarfs nicht lohnt.

Besonders kritisch ist bei dieser Art von Einrichtungen die Vermischung. Bei bekannten Einrichtungen werden die Komponenten einfach von oben durch die Kopfplatte in den Mischbehälter eingeführt und verrührt (US-A-2 649 620). Dabei muss die Innenwandung des Mischbehälters nach jedem Mischvorgang manuell gereinigt oder mit einer Kunststoffolie ausgekleidet werden, bevor die Komponenten erneut in den Mischbehälter eingeführt und dort vermischt werden.

Ein verfeinerte Ausführungsform einer solchen Einrichtung weist am oberen Rand des Mischbehälters eine umlaufende Verteilerrinne auf, von deren Boden ein Ringspalt zur Innenwandung des Mischbehälters öffnet. Hierbei ist jedoch der Mischbehälter mit einem eine verschliessbare Öffnung aufweisenden Boden ausgestattet. Die Komponenten werden durch die Eintrittsöffnungen in den Mischbehälter eingegeben, wobei zunächst eine Komponente eingelassen wird, und zwar in die Verteilerrinne, in der sie sich über den Umfang der Innenwandung des Mischbehälters verteilt, und – diese spülend – daran herabrinnt. Erst dann erfolgt die Eingabe der zweiten Komponente durch die andere Eintrittsöffnung ohne Benutzung der Verteilerrinne. Der Mischbehälter ist also in seinem Aufbau wegen der notwendigen Verteilerrinne und des Bodens mit verschliessbarer Auslassöffnung sehr aufwendig. Der Spülvorgang dauert relativ lange, da der Ringspalt eine gewisse Höchstweite nicht überschreiten darf, damit die Verteilung der Komponente über den gesamten Ringraum der Verteilerrinne sichergestellt ist und alle Wandungsteile gleichmässig bespült werden. Die Auslassöffnung des Bodens lässt sich ohne Materialverlust praktisch nicht spülen.

Aus der DE-A-2 053 435 ist bekannt, die erste Komponente des zu bildenden Schaumstoffes als Spülmittel für Gemischreste zu verwenden, wobei die verschmutzte Mischkammer zuerst mit einem Überschuss an erster Komponente gefüllt wird, sodann durch starkes Rühren alle Wandungen benetzt und so gereinigt werden, worauf der Überschuss aus der Mischkammer entfernt werden muss, bevor die zweite Komponente für die nächste Mischkammerfüllung zugegeben werden kann. Der Spülvorgang ist also bei dieser Vorrichtung recht langwierig und es bedarf eines besonderen Rückförderaggregates für den Überschuss an erster Komponente.

Aufgabe der Erfindung ist es, eine Möglichkeit zu schaffen, um die Innenwandung des Mischbehälters unter Verwendung konstruktiv einfacher Mittel in kürzerer Zeit sicher spülen zu können und auch weitere Stellen, die nicht spülbar sind und wo sich Gemischreste festsetzen könnten, zu vermeiden.

Dies wird erfindungsgemäss dadurch erreicht, dass

a) unterhalb der Eintrittsöffnung einer der Komponenten ein Verteilorgan angeordnet ist derart, dass eine Komponente zu Spülzwecken über die gesamte Innenwandung des Mischbehälters verteilt werden kann, und

b) der Mischbehälter mit seinem unteren Rand dichtend auf den Boden des Formkastens aufsetzbar ist.

Durch diese Massnahme wird erreicht, dass das Verteilorgan die eintretende Komponente – bei der Herstellung von Polyurethan-Schaumstoff aus Isocyanat und Polyol wird in der Regel die Polyolkomponente dafür verwendet – über den oberen Bereich der Innenwandung des bodenlosen Zylinders verteilt, wo sie dann – verbliebene Gemischreste wegspülend – herabrinnt. Ein solches Verteilorgan ist wesentlich einfacher herstellbar als beispielsweise die Verteilerrinne bei der vorbekannten Vorrichtung. Es lässt sich zudem leicht austauschen. Der bodenlose Behälter hat den Vorteil, dass keine nur schwer zu reinigenden Dichtflächen der Auslassöffnung vorhanden sind.

Nach einer besonderen Ausführungsform ist das Verteilorgan in seinem Abstand zur Eintrittsöffnung verstellbar.

Dadurch wird erreicht, dass entsprechend der eingestellten Spaltweite zwischen Eintrittsöffnung und Verteilorgan die Intensität des sich nach allen Seiten fächerartig verteilenden Strahls steuerbar ist. Dies ist insbesondere dann der Fall, wenn die Eintrittsöffnung eine Abschrägung aufweist, die in etwa der Oberflächenkontur des Verteilorgans entspricht.

Vorzugsweise ist das Verteilorgan als Rotor ausgebildet. Diese Ausführungsform ist besonders dann geeignet, wenn der Mischbehälter einen relativ grossen Durchmesser hat und die zu verteilende Komponente deshalb beschleunigt werden muss, um die Innenwandung des Mischbehälters noch in ausreichender Höhe zu benetzen.

Das Verteilorgan kann aus einer ebenen Platte bestehen, ist aber vorzugsweise kegelförmig, halbkugelartig, paraboloidartig ausgebildet. Es versteht sich, dass auch noch weitere ähnliche Ausführungsformen den gleichen Zweck erfüllen und damit in den Rahmen dieser Erfindung fallen.

Nach einer besonderen Ausführungsform weist das Verteilorgan zur Welle des Rührers hin eine Konturierung auf. Diese hat den Sinn, dass – beispielsweise durch entsprechende Einbuchtungen – die Strömung der Komponente auf dem Verteilorgan so gesteuert wird, dass auch der im Schatten der Rührwelle liegende Teil der Innenwandung des Mischbehälters von der Komponente bespült wird. Es ist auch durchaus möglich, dass das Verteilorgan die Rührwelle in Querrichtung ganz oder teilweise umgibt. Die Art der Konturierung hängt von verschiedenen Faktoren ab, wie beispielsweise dem Aussendurchmesser des Verteilorgans, dem Neigungswinkel der Verteilfläche und insbesondere dem Abstand von der Rührwelle.

Im übrigen ist es durchaus möglich, das Verteilorgan asymmetrisch zu gestalten. Dies dürfte insbesondere dann günstig sein, wenn die Eintrittsöffnung stark exzentrisch in der Kopfplatte angeordnet ist.

Die erfindungsgemässe Einrichtung ist in der Zeichnung in einem Ausführungsbeispiel rein schematisch dargestellt und nachstehend näher erläutert. Es zeigen:

Fig. 1 die Einrichtung in der Seitenansicht, teilweise im Schnitt,

Fig. 2 die Einzelheit gemäss A in ausführlicherer Darstellung,

Fig. 3 ein Verteilorgan mit Rotationsantrieb,

Fig. 4 den Kegel eines Verteilorgans mit einer Einbuchtung in der Draufsicht,

Fig. 5 einen Schnitt gemäss Linie B-C in Fig. 4,

Fig. 6 einen die Rührwelle teilweise umgebenden Kegel eines Verteilorgans in der Draufsicht,

Fig. 7 die Ausführungsform gemäss Fig. 6 in der Seitenansicht,

Fig. 8 einen von der Rührwelle durchdrungenen asymmetrischen Kegel eines Verteilorgans und

Fig. 9 einen Schnitt gemäss Linie D-E in Fig. 8.

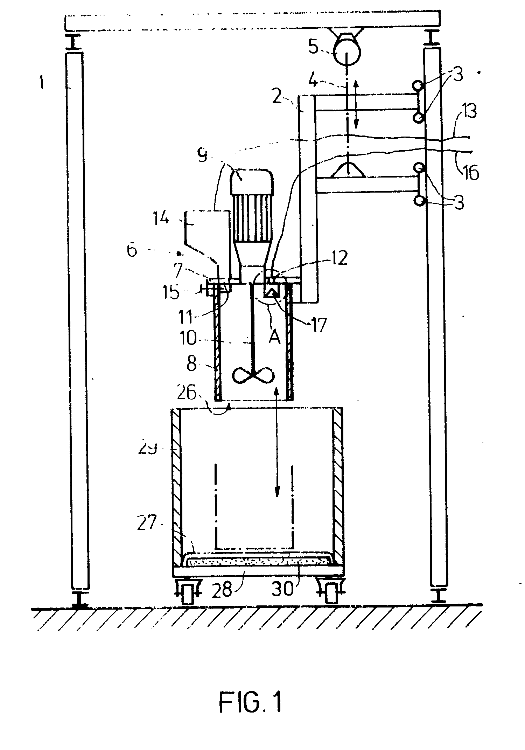

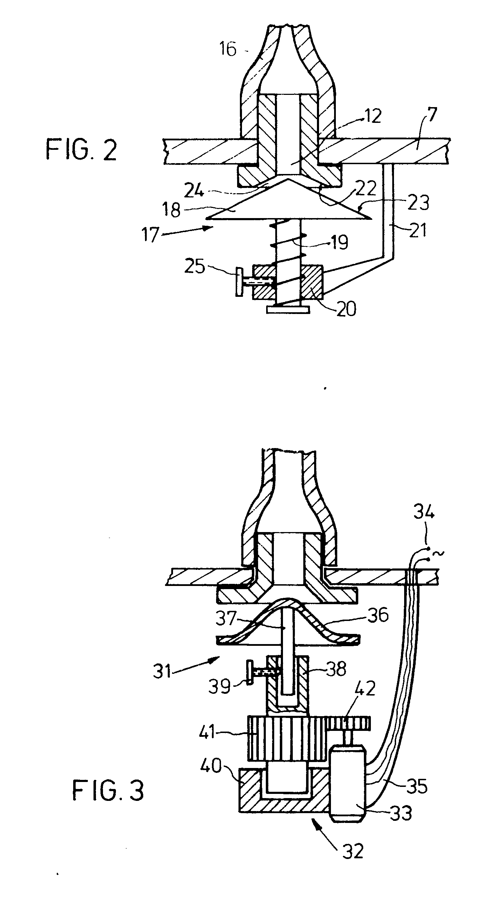

In Fig. 1 ist an einem Rahmengestell 1 eine Tragvorrichtung 2 mittels Rollen 3 senkrecht verfahrbar geführt und an einem Seil 4 aufgehängt, das einer Motorwinde 5 zugeordnet ist. An der Tragvorrichtung 2 ist eine Mischvorrichtung 6 befestigt. Sie besteht im wesentlichen aus einer Kopfplatte 7, an der ein bodenloser Mischbehälter 8 befestigt ist, und aus einem Antrieb 9 für eine Rührwelle 10. In der Kopfplatte 7 sind Eintrittsöffnungen 11, 12 zum Einführen der Komponenten angeordnet. Die Isocyanatkomponente gelangt aus einem Vorratsbehälter über eine Dosierpumpe (beides nicht dargestellt) und einer flexiblen Zuleitung 13 zu einem Zwischenbehälter 14, der auf der Kopfplatte 7 angeordnet ist. Der Auslass des Zwischenbehälters 14, der in geöffnetem Zustand gleichzeitig die Eintrittsöffnung 11 für die Komponente in den Mischbehälter 8 darstellt, ist durch einen Schieber 15 verschliessbar. Dieser Schieber 15 hat einen möglichst grossen Öffnungsquerschnitt, damit das Isocyanat beim Öffnen des Schiebers 15 möglichst schlagartig in den Mischbehälter 8 einbringbar ist. Die Polyolkomponente gelangt von einem Vorratsbehälter über eine Dosierpumpe (beides nicht dargestellt) und eine flexible Zuleitung 16 direkt zur Eintrittsöffnung 12, unter der ein Verteilorgan 17 angeordnet ist. Es besteht (Fig. 2) aus einem rotationssymmetrischen Kegel 18, der auf einem Gewindebolzen 19 angeordnet ist. Jener ist in einer Schraubenmutter 20 geführt, die mittels Halterung 21 von unten an der Kopfplatte 7 befestigt ist. Die Eintrittsöffnung 12 ist in ihrer Kontur 22 der Neigung der Oberfläche 23 des Kegels 18 angepasst, so dass ein einstellbarer Spalt 24 definierter Weite gebildet ist. Mittels einer Arretierschraube 25 lässt sich der Schraubbolzen 19 sichern. Die Mischvorrichtung 6 ist mittels der Tragvorrichtung 2 so weit herabfahrbar, dass der untere Rand 26 des als bodenloser Zylindermantel gestalteten Mischbehälters 8 auf eine Kunststoffolie 27 aufsetzbar ist, die über eine auf dem Boden 28 eines fahrbaren Formkastens 29 angeordnete Weichschaumstoffmatte 30 gespannt ist.

In Fig. 3 ist dem Verteilorgan 31 ein Rotationsantrieb 32 zugeordnet. Er besteht in einfacher Weise aus einem verkapselten elektrischen Antrieb 33, dessen Zuleitungen 34 durch die hohle Halterung 35 des Verteilorgans 31 geführt sind, die gleichzeitig den Antrieb 33 trägt. Die haubenartige Fläche 36 des Verteilorgans 31 ist oben abgerundet, während sie zum Rand hin etwa waagerecht ausläuft. Die Fläche 36 ist auf einer Achse 37 angeordnet, die in einer Hülse 38 geführt ist, und in der sie mittels einer Arretierschraube 39 feststellbar ist. Die Hülse 38 ist in einem Stirnlager 40 gehalten und mit einem Zahnkranz 41 versehen, in den das Ritzel 42 des Antriebs 32 eingreift.

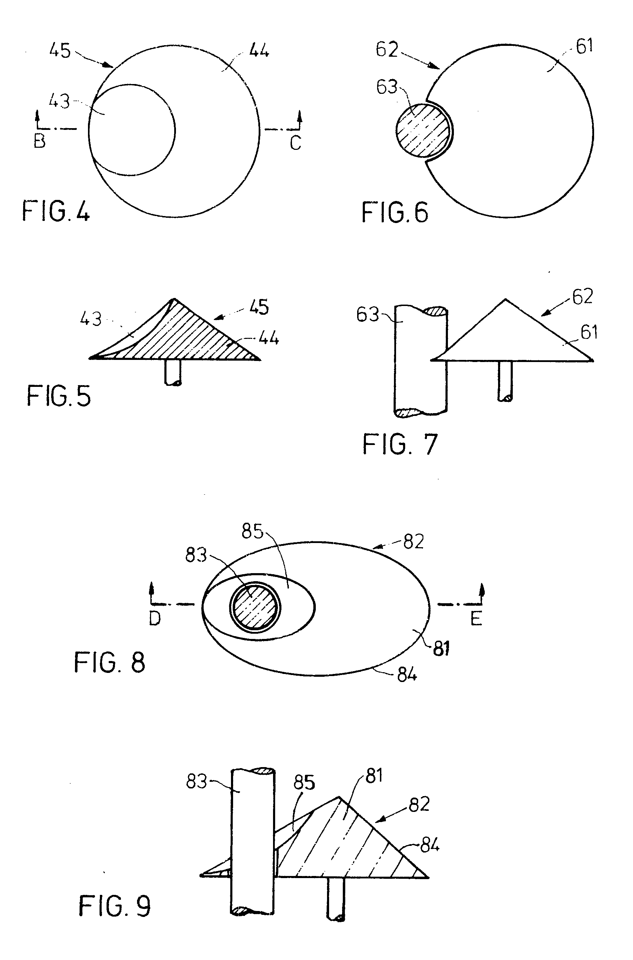

In Fig. 4, 5 ist der Kegel 44 des Verteilorgans 45 mit einer Einbuchtung 43 versehen.

In Fig. 6, 7 umgibt der Kegel 61 des Verteilorgans 62 teilweise die Rührwelle 63.

In Fig. 8, 9 umschliesst der asymmetrische Kegel 81 des Verteilorgans 82 die Rührwelle 83. Ausserdem weist die Oberfläche 84 des Kegels eine Einbuchtung 85 zur besseren Strömungsführung auf.

Die Arbeitsweise der Einrichtung nach Fig. 1, 2 ist folgende:

Es wird diskontinuierlich mit mehreren fahrbaren Formkästen 29 gearbeitet. Nach dem Plazieren eines neuen Formkastens 29 unter die Mischeinrichtung 6 wird diese mittels der Motorwinde 5 abgesenkt, bis der Rand 26 des Mischbehälters 8 auf die Kunststoffolie 27 aufsetzt, wobei die Schaumstoffmatte 30 so weit nachgibt, bis die Mischvorrichtung 6 festen Stand hat. Dann wird die Polyolkomponente über die Eintrittsöffnung 12 unter Druck eingebracht. Dabei gelangt das Polyol durch den Spalt 24, der mittels des Schraubbolzens 19 zwischen der Oberfläche 23 des Kegels 18 und der Kontur 22 der Eintrittsöffnung 12 gebildet ist. Die Oberfläche 23 lenkt das Polyol schirmartig nach allen Seiten auf den oberen Bereich der Innenwandung des Mischbehälters 8, von wo aus es nach unten abläuft und dabei die Innenwandung reinigt. Gleichzeitig wird die Isocyanatkomponente über die Zuleitung 13 in den Zwischenbehälter 14 gefördert. Sobald die gesamte Polyolmenge eingetragen ist, wird unter Betätigen der Rührwelle 10 das Isocyanat durch Öffnen des Schiebers 15 schlagartig eingebracht. Ist die Vermischung beendet, wird die Mischvorrichtung 6 hochgezogen, so dass das Reaktionsgemisch sich innerhalb des Formkastens 29 nach allen Seiten ausbreitet und aufschäumt. Nun wird der Formkasten 29 schnell durch einen neuen ersetzt, und der nächste Zyklus kann beginnen.

## Patentansprüche

1. Einrichtung zum diskontinuierlichen Herstellen von Blockschaumstoff, wobei eine in einem brückenartigen Rahmengestell (1) senkrecht verschiebbare, mit Komponentenzuleitungen (13, 16) versehene, einen Rührer (10) aufweisende Mischvorrichtung (6) angeordnet ist, deren bodenloser Mischbehälter (8) an einer Kopfplatte (7) befestigt ist, die Einlassöffnungen (11, 12) für die Komponenten aufweist, und wobei unterhalb des Mischbehälters (6) ein Formkasten (29) plazierbar ist, dadurch gekennzeichnet, dass
a) unterhalb der Eintrittsöffnungen (12) einer der Komponenten ein Verteilorgan (17, 31, 45, 62, 82) angeordnet ist derart, dass eine Komponente zu Spülzwecken über die gesamte Innenwandung des Mischbehälters (8) verteilt werden kann und
b) der Mischbehälter (8) mit seinem unteren Rand (26) dichtend auf den Boden (27, 28, 30) des Formkastens (29) aufsetzbar ist.

2. Einrichtung nach Anspruch 1, dadurch gekennzeichnet, dass das Verteilorgan (17, 31) in seinem Abstand zur Eintrittsöffnung (12) verstellbar ist.

3. Einrichtung nach Anspruch 1 oder 2, dadurch gekennzeichnet, dass das Verteilorgan (31) als Rotor ausgebildet ist.

4. Einrichtung nach den Ansprüchen 1 bis 3, dadurch gekennzeichnet, dass das Verteilorgan (17, 31, 45, 62, 82) kegelförmig, halbkugelartig, paraboloidartig ausgebildet ist.

5. Einrichtung nach den Ansprüchen 1, 2 und 4, dadurch gekennzeichnet, dass das Verteilorgan (45, 82) zur Rührerwelle (83) hin eine Konturierung (43, 85) aufweist.

## Revendications

1. Dispositif pour réaliser la fabrication discontinue de matériau mousse en bloc, dans lequel se trouve disposé un dispositif mélangeur (6) qui peut être déplacé verticalement dans un châssis-support (1) en forme de pont et est équipé de conduites (13, 16) d'amenée de composants et comporte un agitateur (10) et dont la cuve de mélange (8) sans fond est fixée à une plaque supérieure (7) qui comporte des ouvertures d'admission (11, 12) pour les composants, et dans lequel un châssis de moule (29) peut être disposé au-dessous de la cuve de mélange (6), caractérisé en ce que:
a) un organe de répartition (17, 31, 45, 62, 82) est disposé au-dessous des ouvertures d'admission (12) de l'un des composants, de telle manière qu'un composant peut, en vue de réaliser un lavage, être réparti sur l'ensemble de la paroi intérieure de la cuve de mélange (8), et
b) la cuve de mélange (8) peut être posée par son bord inférieur (26) d'une manière étanche sur le fond (27, 28, 30) du châssis de moule (29).

2. Dispositif selon la revendication 1, caractérisé par le fait que la distance de l'organe de répartition (17, 31) à l'ouverture d'admission (12) est réglable.

3. Dispositif selon la revendication 1 ou 2, caractérisé en ce que l'organe de répartition (31) est réalisé sous la forme d'un rotor.

4. Dispositif selon les revendications 1 à 3, caractérisé en ce que l'organe de répartition (17, 31, 45, 62, 82) est réalisé avec une forme de cône, une forme de demi-sphère ou une forme de paraboloïde.

5. Dispositif selon les revendications 1, 2 et 4, caractérisé en ce que l'organe de répartition (45, 82) comporte une partie profilée (43, dirigée vers l'arbre (83) de l'agitateur.

## Claims

1. A device for the intermittent production of block foam, in which is arranged a mixing apparatus (6) which is vertically movable in a bridge-like framework (1), is provided with component feed pipes (13, 16) and has a stirrer (10), the mixing apparatus having a bottomless mixing container (8) which is fixed to a head plate (7) having inlet openings (11, 12) for the components, and wherein a moulding box (29) can be placed beneath the mixing container (6), characterised in that
(a) a distributing member (17, 31, 45, 62, 82) is arranged beneath the inlet openings (12) for one of the components in such a way that one component can be distributed, for rinsing purposes, over the entire internal wall of the mixing chamber (8) and
(b) the lower edge (26) of the mixing container can be placed, with the effect of sealing, on the bottom (27, 28, 30) of the moulding box (29).

2. A device according to Claim 1, characterised in that the distance of the distributing member (17, 21) from the inlet opening (12) can be adjusted.

3. A device according to Claim 1 or 2, characterised in that the distributing member (31) is designed as a rotor.

4. A device according to Claims 1 to 3, characterised in that the distributing member (17, 31, 45, 62, 82) is conical, hemispherical or paraboloid in design.

5. A device according to Claims 1, 2 and 4, characterised in that the distributing member (45, 82) has contouring (43, 85) toward the stirrer shaft (83).

FIG. 1

FIG. 2

FIG. 3

FIG. 4

FIG. 6

FIG. 5

FIG. 7

FIG. 8

FIG. 9